# EUROPÄISCHE PATENTANMELDUNG

(11) **EP 0 920 216 A1**
(43) Veröffentlichungstag der Anmeldung: **02.06.1999**
(21) Anmeldenummer: 97203687.5
(22) Anmeldetag: 25.11.1997
(51) Int. Cl.: H04N 7/36

(54) **Verfahren und Vorrichtung zur Codierung und zur Decodierung einer Bildsequenz**

(71) Anmelder: DEUTSCHE THOMSON-BRANDT GMBH, 78048 Villingen-Schwenningen (DE)
(72) Erfinder: Adolph, Dirk, 30952 Ronnenberg/Benthe (DE); Blawat, Meinolf, 30161 Hannover (DE)
(74) Vertreter: Hartnack, Wolfgang, Dipl.-Ing.

(57) **Zusammenfassung**

In der Datenkompression für Bewegtbild-Sequenzen werden bewegungskompensierte Hybrid-Codecs eingesetzt. Diese Kompressions-Verfahren ermöglichen durch das regelmäßige Einfügen von intraframe-codierten Bildern den Zugriff auf beliebige Einzelbilder im gesamten Bitstrom bzw. das Abspielen des Bitstroms von praktisch jeder beliebigen Stelle aus. Ein Nachteil ist der für intraframe-codierte Bilder nötige große Bit-Aufwand. Üblicherweise enthält ein Codec in einer Rückkoppelungs-Schleife eine Nachbildung des empfängerseitigen Decoders, dessen Codierfehler so vom Encoder mitberücksichtigt werden können. In diese Rückkoppelungs-Schleife wird erfindungsgemäß ein Dämpfungsglied eingefügt. Die Codierung und die empfängerseitige Decodierung von intraframe-codierten Bildern wird überflüssig. Nach der empfängerseitigen Decodierung von einigen Bildern, beginnend mit einem Graubild als Startbild, besteht für einen Betrachter kein Unterschied mehr zwischen bekannt codierten Bildsequenzen, die in relativ kurzen Abständen I-Bilder enthalten, und erfindungsgemäß codierten Bildsequenzen.

## Beschreibung

Die Erfindung betrifft ein Verfahren und eine Vorrichtung zur Codierung und zur Decodierung einer Bildsequenz.

### Stand der Technik

In der Datenkompression für Bewegtbild-Sequenzen, wie z.B. im MPEG1- oder MPEG2-Standard, werden vorwiegend bewegungskompensierte Hybrid-Codecs (Encoder mit darin enthaltenem nachgebildetem Decoder) eingesetzt. Diese Kompressions-Verfahren ermöglichen durch das regelmäßige Einfügen von intraframe-codierten Bildern (I-frames) den Zugriff auf beliebige Einzelbilder im gesamten Bitstrom bzw. das Abspielen des Bitstroms von praktisch jeder beliebigen Stelle aus. Ein intraframe-codiertes Bild ist für sich einzeln aus den Zugehörigen Daten decodierbar und benötigt keine Daten von anderen Bildern zur Rekonstruktion. Im Gegensatz dazu sind interframe-codierte Bilder (P-frames) nicht für sich decodierbar, sondern benötigen jeweils mindestens ein Bezugsbild zu ihrer Rekonstruktion. Dieses Bezugsbild (anchor frame) muß schon zuvor decodiert worden sein.

### Erfindung

Durch das Einfügen von intraframe-codierten Bildern in einen Video-Bitstrom wäre jedes Bild einer Bildsequenz ab einem solchen intraframe-codierten Bild decodierbar ohne den Video-Bitstrom der gesamten Bildsequenz decodieren zu müssen. Jedes intraframe-codierte Bild könnte sofort decodiert werden und jedes interframe-codierte Bild könnte durch Decodierung des zeitlich nächstgelegenen vorhergehenden intraframe-codierten Bildes und nachfolgende Decodierung der Bildsequenz bis zum gewünschten interframe-codierten Zielbild decodiert werden.
Ein Nachteil eines solchen Verfahrens ist der für intraframe-codierte Bilder nötige große Bit-Aufwand. Der Faktor von den benötigten Bits für intraframe-codierte Bildern I zu den benötigten Bits für einfach vorwärts prädizierte interframe-codierte Bilder P beträgt ca. 10:1 im typischen MPEG2-Format (M=3; N=12). Darin ist N der Abstand von einem intraframe-codierten Bild zum nächsten und M der Abstand von einem I-Bild zum darauffolgenden P-Bild - oder umgekehrt - und der Abstand von einem P-Bild zum nächsten P-Bild. Dazwischen können B-Bilder liegen, die z.B. bi-direktional prädiziert sein können.

Der Erfindung liegt die Aufgabe zugrunde, ein Verfahren zur Bildsequenz-Codierung und -Decodierung anzugeben, bei der auf solche I-Bilder oder auf deren relativ häufige Übertragung verzichtet werden kann, aber trotzdem eine Decodierung von praktisch beliebiger Stelle in einer Bildsequenz aus stattfinden kann. Diese Aufgabe wird durch die in den Ansprüchen 1 und 5 angegebenen Verfahren gelöst.

Der Erfindung liegt die weitere Aufgabe zugrunde, eine Vorrichtung zur Codierung und zur Decodierung einer Bildsequenz mit Anwendung des erfindungsgemäßen Verfahrens anzugeben. Diese Aufgabe wird durch die in den Ansprüchen 8 und 9 angegebenen Vorrichtungen gelöst.

Wie oben erwähnt, ist üblicherweise in einem Codec eine Nachbildung des empfängerseitigen Decoders enthalten. Dessen Codierfehler können so vom Encoder mitberücksichtigt werden. Die Decoder-Nachbildung ist üblicherweise in einer Rückkoppelungs-Schleife des Hybrid-Codecs angeordnet. Durch die erfindungsgemäße Einführung eines Dämpfungsgliedes in diese Rückkoppelungs-Schleife wird die Einfügung und Codierung und die empfängerseitige Decodierung von intraframe-codierten I-Bildern überflüssig. Das Dämpfungsglied bewirkt die Verkleinerung von Amplituden-Werten von prädizierten Koeffizienten. Die erfindungsgemäße Dämpfung im Rückkopplungszweig des Hybrid-Codecs bewirkt daher zunächst eine künstliche, eigentlich unerwünschte Verschlechterung der Prädiktion und führt zu einer Vergrößerung des zu codierenden Prädiktionsfehlers. Wird die eingefügte Dämpfung im Rückkopplungszweig jedoch in ihrer Größe geeignet gewählt, so kann überraschenderweise auf die Verwendung von intraframe-codierten Bildern gänzlich verzichtet werden, ohne dadurch die Eigenschaft einzubüßen, den Video-Bitstrom an praktisch beliebiger Stelle decodieren zu können.
Das Starten der empfängerseitigen Decodierung an beliebiger Stelle im Bitstrom bzw. in einer Bildsequenz geschieht folgendermaßen: Als erstes Prädiktionsbild oder als Referenz-Bild wird ein Graubild verwendet, vorzugsweise ein Graubild mit mittlerer Helligkeit. Das erste im Empfänger decodierte Prädiktions-Fehlersignal wird mit diesem Graubild kombiniert. Die nachfolgenden interframe-codierten Bilder werden dann in bekannter Weise decodiert. Durch die Einführung des Dämpfungsgliedes im Encoder baut sich der auf diese Art anfangs erzeugte empfängerseitige Rekonstruktions-Fehler im Laufe der Decodierung der nachfolgenden Bilder sukzessive ab, denn auch in der encoderseitigen Decoder-Funktions-Nachbildung sind aufgrund des Dämpfungsgliedes künstlich Fehler eingeführt worden, die der Encoder zu vermindern sucht.
Die Erfindung bewirkt, daß nach der empfängerseitigen Decodierung von L Bildern für einen Betrachter kein bemerkbarer Unterschied mehr besteht zwischen bekannt codierten Bildsequenzen, die in relativ kurzen Abständen I-Bilder enthalten, und erfindungsgemäß codierten Bildsequenzen, die zumindest über einen längeren Zeitraum keine I-Bilder enthalten. Zwischen den P-Bildern können B-Bilder angeordnet sein. Diese bewirken einerseits keine Fehlerfortpflanzung, andererseits aber auch kein Abbauen von sichtbaren Rekonstruktionsfehlern.

Der empfängerseitige Video-Decoder kann daher nach Decodieren von L Bildern - oder schon einige Bilder vorher - decodierte Bilder anzeigen.
Der Wert des Parameters L ist von der Einstellung der Dämpfung D eines Dämpfungsgliedes in der Rückkopplung des Codecs abhängig und bestimmt auch die resultierende Bitrate. Bei kleinem L ist die Dämpfung D groß und die Konvergenz des empfängerseitigen Decodierfehlers schneller, aber die Bitrate erhöht. Bei großem L ist die Dämpfung D klein und die Konvergenz des empfängerseitigen Decodierfehlers langsamer, aber die Bitrate niedrig.

Im Prinzip besteht das erfindungsgemäße Verfahren zur Codierung einer Bildsequenz darin, daß aus Bildpunkt-Werten der Bildsequenz betreffenden Differenz-Werten gebildete transformierte Bilddaten-Koeffizienten entropie-encodiert werden, wobei die transformierten Bilddaten-Koeffizienten invers transformiert und in prädizierter Form zur Bildung der Differenz-Werte zu den Bildpunkt-Werten verwendet werden und die prädizierten Bildpunkt-Werte vor der Bildung der Differenz-Werte in ihrer Amplitude gedämpft werden.

Im Prinzip besteht das erfindungsgemäße Verfahren zur Decodierung einer Bildsequenz mit aus Bildpunkt-Werten der Bildsequenz betreffenden Differenz-Werten gebildeten transformierten und codierten Bilddaten-Koeffizienten darin, daß die entropie-decodierten transformierten Bilddaten-Koeffizienten invers transformiert und in prädizierter Form mit den Differenz-Werten kombiniert werden, wobei die den transformierten und codierten Bilddaten-Koeffizienten zugrundeliegenden Differenz-Werte von in ihrer Amplitude gedämpften prädizierten Bildpunkt-Werten abgeleitet sind und zum Start der Decodierung die invers transformierten Bilddaten-Koeffizienten mit einem Graubild kombiniert werden.

Vorteilhafte Weiterbildungen der erfindungsgemäßen Verfahren ergeben sich aus den zugehörigen abhängigen Ansprüchen.

Im Prinzip ist die erfindungsgemäße Vorrichtung zur Codierung einer Bildsequenz versehen mit:
- Mitteln zur Bildung von die Bildsequenz betreffenden Differenz-Werten von Bildpunkt-Werten, denen Eingangs-Daten der Bildsequenz zugeführt werden;
- Mitteln zur Bildung von transformierten Bilddaten-Koeffizienten, die von den Differenz-Werten abgeleitet sind;
- einem Entropie-Encoder für die transformierten Bilddaten-Koeffizienten;
- Mitteln zur Bildung von invers transformierten Bilddaten-Koeffizienten, die von den transformierten Bilddaten-Koeffizienten abgeleitet sind;
- Mitteln zur Bildung von prädizierten Bildpunkt-Werten, deren Ausgangs-Signal zur Bildung der Differenz-Werte verwendet wird, wobei eine Dämpfungs-Einheit die prädizierten Bildpunkt-Werte dämpft, bevor sie zur Bildung der Differenz-Werte verwendet werden.

Im Prinzip ist die erfindungsgemäße Vorrichtung zur Decodierung einer Bildsequenz versehen mit:
- einem Entropie-Decoder für transformierte Bilddaten-Koeffizienten;
- Mitteln zur Bildung von invers transformierten, decodierten Bilddaten-Koeffizienten, die Differenz-Werte von Bildpunkt-Werten enthalten;
- Mitteln zur Bildung von prädizierten Bildpunkt-Werten, deren Ausgangs-Signal mit den Differenz-Werten kombiniert wird und die decodierte Bildsequenz darstellt,
   wobei die Differenz-Werte von encoderseitig in ihrer Amplitude gedämpften prädizierten Bildpunkt-Werten abgeleitet sind und zum Start der Decodierung in Kombinations-Mitteln die invers transformierten Bilddaten-Koeffizienten mit einem Graubild kombiniert werden.

Vorteilhafte Weiterbildungen der erfindungsgemäßen Vorrichtungen ergeben sich aus den zugehörigen abhängigen Ansprüchen.

### Zeichnungen

Anhand der Zeichnungen sind Ausführungs-Beispiele der Erfindung beschrieben. Diese zeigen in:
- Fig. 1: bekannter Encoder für Bilddaten;
- Fig. 2: Decoder für Bilddaten;
- Fig. 3: erfindungsgemäßer Encoder für Bilddaten.

### Ausführungs-Beispiele

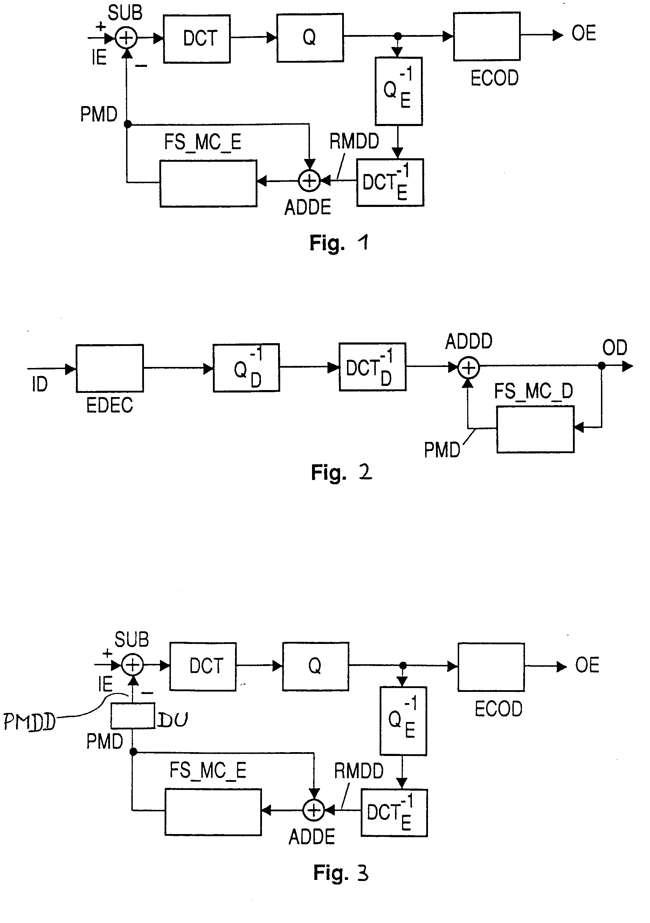

Das Videodaten-Eingangssignal IE des Encoders in Fig. 3 enthält Macroblock-Daten zur Encodierung. Im Fall von Intraframe-Bild-Daten läßt ein Subtrahierer SUB diese einfach passieren. Sie werden in diskreten Cosinus-Transformations-Mitteln DCT und Quantisier-Mitteln Q bearbeitet und einem Entropie-Encoder ECOD zugeführt, der das Encoder-Videodaten-Ausganssignal OE abgibt. ECOD kann z.B. eine Huffman-Codierung für die Koeffizienten durchführen, Header-Informationen und Bewegungsvektor-Daten hinzufügen.
Im Fall von Interframe-Bild-Daten werden prädizierte Macroblock-Daten PMD im Subtrahierer SUB vom Eingangssignal IE subtrahiert und die Differenz-Daten über die diskreten Cosinus-Transformations-Mittel DCT und die Quantisier-Mittel Q dem Entropie-Encoder ECOD zugeführt. Das Ausgangssignal von Q wird auch in inversen Quantisier-Mitteln Q_{E}⁻¹ bearbeitet, deren Ausgangssignal über inverse diskrete Cosinus-Transformations-Mittel DCT_{E}⁻¹ dem Kombinierer ADDE in Form von rekonstruierten Macroblock-Differenz-Daten RMDD zugeführt wird. Das Ausgangssignal von ADDE wird in einem Bildspeicher in Bewegungs-Schätzungs- und -Kompensations-Mitteln FS_MC_E zwischengespeichert, die eine Bewegungs-Kompensation für rekonstruierte Macroblock-Daten durchführen und derartig prädizierte Macroblock-Daten PMD an den subtrahierenden Eingang von SUB und an den anderen Eingang von Kombinierer ADDE abgeben.
Die Quantisier-Mittel Q, die inversen Quantisier-Mittel Q_{E}⁻¹ und beispielsweise ECOD werden gesteuert durch den Füllungsgrad des Encoder-Speichers ENCB.
Q_{E}⁻¹, DCT_{E}⁻¹, ADDE und FS_MC_E stellen eine Nachbildung des empfängerseitigen Decoders dar, der auch in Zusammenhang mit Fig. 2 beschrieben ist.

In Fig. 2 wird das Videodaten-Eingangssignal ID über Entropie-Decoder-Mittel EDEC, inverse Quantisier-Mittel Q_{D}⁻¹ und inverse diskrete Cosinus-Transformations-Mittel DCT_{D}⁻¹ einem Kombinierer ADDD zugeführt, der das Video-Daten-Ausgangssignal OD abgibt. EDEC kann z.B. eine Huffman-Decodierung für die Koeffizienten durchführen und Header-Informationen und Bewegungsvektor-Daten decodieren bzw. auswerten.
Q_{E}⁻¹ bzw. Q_{D}⁻¹, DCT_{E}⁻¹ bzw. DCT_{D}⁻¹ und ECOD haben eine entsprechend inverse Funktion zu der Funktion von Q, DCT und ECOD. Das Ausgangs-Signal von ADDD wird in einem Bildspeicher in Bewegungs-Kompensations-Mitteln FS_MC_D zwischengespeichert. FS_MC_D bewirkt eine Bewegungs-Kompensation für rekonstruierte Macroblock-Daten.

Die in FS_MC_D prädizierten Macroblock-Daten PMD werden bei bekannten Decodern nur im Fall von interframe-decodierten Macroblock-Daten auf den zweiten Eingang von Kombinierer ADDE gegeben. Im Fall von intraframe-decodierten Macroblock-Daten leitet der Kombinierer ADDD das Ausgangs-Signal von DCT_{D}⁻¹ einfach weiter.

Bei erfindungsgemäßen Decodern, die keine intraframe-codierten I-Bilder empfangen, werden die in FS_MC_D prädizierten Macroblock-Daten PMD immer auf den zweiten Eingang von Kombinierer ADDE gegeben. Daher kann ein solcher erfindungsgemäßer Decoder diesbezüglich einfacher aufgebaut sein als bekannte Decoder. Eine Detektion, ob intraframe-codierte oder interframe-codierte Bilddaten vorliegen, kann entfallen. Eine Umschaltung für ADDD zwischen den beiden Modi kann ebenfalls entfallen. Bei Beginn einer Bildsequenz-Decodierung muß FS_MC_D oder eine andere Einheit lediglich für den zweiten Eingang von ADDD oder in ADDD selbst Graubild-Daten für ein Decodierungs-Start-Bild erzeugen. Dies bedeutet in der digitalen Bildverarbeitung aber nur, einen fest eingestellten Zahlenwert abzufragen oder weiterzuleiten, d.h. einen minimalen Aufwand. Ausgang OD kann dann z.B. erst nach einer festgelegten Anzahl von decodierten Bildern ein für einen Betrachter sichtbares Ausgangsbild abgeben. Bis dahin kann das Bild dunkel getastet werden oder ein Grauwert, vorzugsweise der oben erwähnte Start-Grauwert, dargestellt werden.

Der Start-Grauwert kann auch adaptiv gewählt werden, wodurch schneller eine Konvergenz der Prädiktionsfehler erreicht werden kann. Z.B. kann, wenn die DC-Differenz-Koeffizienten der Macroblock-Daten bei dem zum Decodier-Startzeitpunkt aktuellen Bild überwiegend größere positive Werte haben, der Start-Grauwert eher dunkler gewählt werden. Wenn die DC-Differenz-Koeffizienten der Macroblock-Daten bei dem zum Decodier-Startzeitpunkt aktuellen Bild überwiegend größere negative Werte haben, kann der Start-Grauwert eher heller gewählt werden. Wenn die DC-Differenz-Koeffizienten der Macroblock-Daten bei dem zum Decodier-Startzeitpunkt aktuellen Bild überwiegend kleine Werte haben, kann dann für den Start-Grauwert eher eine mittlere Helligkeit gewählt werden.

Das Videodaten-Eingangssignal IE des erfindungsgemäßen Encoders in Fig. 3 enthält Macroblock-Daten zur Encodierung.

Bei einer ersten Ausführungsform des erfindungsgemäßen Encoders werden nur selten Intraframe-Bild-Daten generiert, insbesondere mit einem Abstand N > 12. Zusätzlich wird die erfindungsgemäße Dämpfung D verwendet.
Bei einer zweiten Ausführungsform des erfindungsgemäßen Encoders werden nie Intraframe-Bild-Daten generiert, sondern nur die erfindungsgemäße Dämpfung verwendet.
Bei der ersten Ausführungsform läßt im Fall von Intraframe-Bild-Daten ein Subtrahierer SUB diese einfach passieren. Sie werden in beiden Ausführungsformen in diskreten Cosinus-Transformations-Mitteln DCT und Quantisier-Mitteln Q bearbeitet und einem Entropie-Encoder ECOD zugeführt, der das Encoder-Videodaten-Ausganssignal OE abgibt.
Bei der ersten Ausführungsform im Fall von Interframe-Bild-Daten, bei der zweiten Ausführungsform immer, werden prädizierte und gedämpfte Macroblock-Daten PMDD im Subtrahierer SUB vom Eingangssignal IE subtrahiert und die Differenz-Daten über die diskreten Cosinus-Transformations-Mittel DCT und die Quantisier-Mittel Q dem Entropie-Encoder ECOD zugeführt. Das Ausgangssignal von Q wird auch in inversen Quantisier-Mitteln Q_{E}⁻¹ bearbeitet, deren Ausgangssignal über inverse diskrete Cosinus-Transformations-Mittel DCT_{E}⁻¹ dem Kombinierer ADDE in Form von rekonstruierten Macroblock-Differenz-Daten RMDD zugeführt wird. Das Ausgangssignal von ADDE wird in einem Bildspeicher in Bewegungs-Schätzungs- und -Kompensations-Mitteln FS_MC_E zwischengespeichert, die eine Bewegungs-Kompensation für rekonstruierte Macroblock-Daten durchführen und derartig prädizierte Macroblock-Daten PMD an den anderen Eingang von Kombinierer ADDE und über eine Dämpfungs-Einheit DU an den subtrahierenden Eingang von SUB abgeben.
Die Quantisier-Mittel Q, die inversen Quantisier-Mittel Q_{E}⁻¹ und beispielsweise ECOD werden gesteuert durch den Füllungsgrad des Encoder-Speichers ENCB.
Q_{E}⁻¹, DCT_{E}⁻¹, ADDE und FS_MC_E stellen wiederum eine Nachbildung des empfängerseitigen Decoders dar.

Die Dämpfungs-Einheit DU reduziert ankommende Bildpunkt-Werte beispielsweise durch Multiplikation mit einem Faktor D. Kleine Werte von D liegen beispielsweise im Bereich von 0,1 bis 0,3 , große Werte von D liegen beispielsweise im Bereich von 0,5 bis 0,9 . Vorzugsweise liegt D im Bereich 0,4 bis 0,8 .
DU kann auch nur einen konstanten Wert oder zusätzlich einen konstanten Wert von allen Bildpunkt-Werten abziehen, wobei die Bildpunkt-Werte aber nicht kleiner als der Schwarzwert oder bei Chrominanz-Signalen einem dem Schwarzwert entsprechenden Wert werden können. Mit einem Begrenzer kann sichergestellt werden, daß die Bildpunkt-Werte keinen unzulässigen Wert erreichen.
D kann bei der Codierung von Luminanz- und Chrominanz-Signalen unterschiedlich sein.

Die Erfindung kann z.B. zum Einsatz kommen bei der Übertragung von digitalen Fernsehsignalen oder bei der Übertragung von digitalen Bildsignalen in Netzen wie dem Internet oder beim Bild-Telefon oder beim Aufzeichnen oder beim Mastering optischer oder magnetischer Speichermedien, z.B. DVD, und bei deren Abspielen.

## Patentansprüche

1. Verfahren zur Codierung einer Bildsequenz (IE), bei dem aus Bildpunkt-Werten der Bildsequenz betreffenden Differenz-Werten gebildete transformierte Bilddaten-Koeffizienten (DCT, Q) entropie-encodiert (ECOD) werden, wobei die transformierten Bilddaten-Koeffizienten invers transformiert (Q_{E}⁻¹, DCT_{E}⁻¹) und in prädizierter Form (FS_MC_E, ADDE) zur Bildung der Differenz-Werte zu den Bildpunkt-Werten verwendet werden, dadurch **gekennzeichnet,** daß die prädizierten Bildpunkt-Werte (PMD) vor der Bildung (SUB) der Differenz-Werte in ihrer Amplitude gedämpft (DU) werden.

2. Verfahren nach Anspruch 1, wobei die encodierte Bildsequenz keine intraframe-codierten Bilder oder intraframe-codierten Bildpunkt-Blöcke enthält.

3. Verfahren nach Anspruch 1 oder 2, wobei die Dämpfung durch Multiplikation der prädizierten Bildpunkt-Werte mit einem vorbestimmten Faktor erfolgt.

4. Verfahren nach einem oder mehreren der Ansprüche 1 bis 3, wobei die Dämpfung durch Verminderung der Beträge der prädizierten Bildpunkt-Werte um einen vorbestimmten Faktor erfolgt.

5. Verfahren zur Decodierung einer Bildsequenz von aus Bildpunkt-Werten der Bildsequenz betreffenden Differenz-Werten gebildeten transformierten und codierten Bilddaten-Koeffizienten (ID), wobei die entropie-decodierten (EDEC) transformierten Bilddaten-Koeffizienten invers transformiert (Q_{D}⁻¹, DCT_{D}⁻¹) und in prädizierter Form (FS_MC_D) mit den Differenz-Werten kombiniert (ADDD) werden, dadurch **gekennzeichnet,** daß die den transformierten und codierten Bilddaten-Koeffizienten zugrundeliegenden Differenz-Werte von in ihrer Amplitude gedämpften prädizierten Bildpunkt-Werten abgeleitet sind und zum Start der Decodierung die invers transformierten Bilddaten-Koeffizienten mit einem Graubild kombiniert werden.

6. Verfahren nach Anspruch 5, wobei die zu decodierende Bildsequenz keine intraframe-codierten Bilder oder intraframe-codierten Bildpunkt-Blöcke enthält.

7. Verfahren nach Anspruch 5 oder 6, wobei der Grauwert für ein Startbild adaptiv bestimmt wird.

8. Vorrichtung zur Codierung einer Bildsequenz (IE), versehen mit:
- Mitteln (SUB) zur Bildung von die Bildsequenz betreffenden Differenz-Werten von Bildpunkt-Werten, denen Eingangs-Daten der Bildsequenz zugeführt werden;
- Mitteln (DCT, Q) zur Bildung von transformierten Bilddaten-Koeffizienten, die von den Differenz-Werten abgeleitet sind;
- einem Entropie-Encoder (ECOD) für die transformierten Bilddaten-Koeffizienten;
- Mitteln (Q_{E}⁻¹, DCT_{E}⁻¹) zur Bildung von invers transformierten Bilddaten-Koeffizienten, die von den transformierten Bilddaten-Koeffizienten abgeleitet sind;
- Mitteln (FS_MC_E, ADDE) zur Bildung von prädizierten Bildpunkt-Werten (PMD), deren Ausgangs-Signal zur Bildung der Differenz-Werte verwendet wird, **gekennzeichnet** durch
- eine Dämpfungs-Einheit (DU) zur Dämpfung der prädizierten Bildpunkt-Werte (PMD) bevor sie zur Bildung der Differenz-Werte verwendet werden.

9. Vorrichtung zur Decodierung einer Bildsequenz, versehen mit:
- einem Entropie-Decoder (EDEC) für transformierte Bilddaten-Koeffizienten;
- Mitteln (Q_{D}⁻¹, DCT_{D}⁻¹) zur Bildung von invers transformierten, decodierten Bilddaten-Koeffizienten, die Differenz-Werte von Bildpunkt-Werten enthalten;
- Mitteln (FS_MC_D) zur Bildung von prädizierten Bildpunkt-Werten, deren Ausgangs-Signal mit den Differenz-Werten kombiniert wird und die decodierte Bildsequenz darstellt,
dadurch **gekennzeichnet,** daß die Differenz-Werte von encoderseitig in ihrer Amplitude gedämpften prädizierten Bildpunkt-Werten abgeleitet sind und zum Start der Decodierung in Kombinations-Mitteln (ADDD) die invers transformierten Bilddaten-Koeffizienten mit einem Graubild kombiniert werden.

10. Aufzeichnungs-Medium, insbesondere optische Platte, mit Bild-Daten (OE), die nach einem Verfahren gemäß einem der Ansprüche 1 bis 4 codiert sind.
